# EUROPEAN PATENT APPLICATION

(11) **EP 4 421 469 A1**
(43) Date of publication of application: **28.08.2024**
(21) Application number: 22883424.8
(22) Date of filing: 12.10.2022
(51) Int. Cl.: G01M 3/26, F16L 55/18, F25B 49/02

(54) **APPARATUS AND METHOD FOR CHECKING FOR LEAKAGE OF REFRIGERANT GAS IN AIR CONDITIONING SYSTEM**

(30) Priority: 22.10.2021 JP 2021172973
(71) Applicant: Factory Inc., Asahikawa-shi, Hokkaido 078-8821 (JP)
(72) Inventor: ISHIMURA Toshihiro, Asahikawa-shi Hokkaido 070-8013 (JP)
(74) Representative: Gill Jennings & Every LLP
(86) International application number: PCT/JP2022/037973
(87) International publication number: WO 2023/068120

(57) **Abstract**

Provided is an apparatus that can prevent entry of foreign matter and moisture when compressed air is injected into an air conditioning system and can more reliably and promptly check for leakage of refrigerant gas in the air conditioning system. The apparatus includes a branching device including an inflow port through which dry compressed air having a predetermined moisture content or less flows in, an outflow port through which the dry compressed air flows out, and an opening and closing valve that controls a flow rate of the dry compressed air between the inflow port and the outflow port, and a pressure gauge that measures a pressure inside the air conditioning system. The apparatus preferably further includes a filter on the upstream side of the gas inflow port. The apparatus further includes a channel through which the dry compressed air is fed from the outflow port to a service valve of the air conditioning system.

## Description

### Technical Field

The present invention relates to a checking technique for an air conditioning system and, more specifically, relates to an apparatus and a method for checking for leakage of refrigerant gas, the apparatus and the method being capable of checking for the presence or absence of leakage and identifying a leakage point without injecting refrigerant gas when leakage of refrigerant gas from an air conditioning system is suspected.

### Background Art

One of the causes of failures of air conditioning systems used in motor vehicles or buildings is leakage of refrigerant gas from pipes or devices. As conventional techniques for inspecting for leakage of refrigerant gas, a method that adds an inspection liquid that reacts to special light to refrigerant gas and identifies a leakage point by application of the light and a method that identifies a leakage point using a detector that reacts to refrigerant gas are mainly used. Here, the air conditioning system refers to a system including devices required for air conditioning (e.g., a compressor, a condenser, an expansion valve, an evaporator, etc.) and pipes that connect these devices.

These conventional techniques have the following problems. First, the inspection has to be performed in a state in which refrigerant gas is filled in the air conditioning system and the compressor is operating. Next, when an area considered to be a refrigerant gas leakage point is identified, it is necessary to extract the refrigerant gas with the operation of the air conditioning system stopped, repair the identified leakage point, and then perform a reinspection in a state in which refrigerant gas is injected again into the air conditioning system and the compressor is operating. Depending on the piping length of the air conditioning system, the processes up to this point may take several hours. However, usually, it is often not possible to identify the exact leakage point on the first inspection, and the above-mentioned processes have to be repeated when the repair is incomplete. As described above, the operation of the refrigerant gas leakage inspection performed using the conventional techniques is time consuming, and, when it is necessary to repeat the above-mentioned processes several times to identify the leakage point, not only refrigerant gas is wasted, but also an environmental problem arises due to the release of refrigerant gas into the atmosphere.

A technique described in Patent Literature 1 is proposed as a method for detecting refrigerant gas leakage in an air conditioner for a motor vehicle. This technique is a method that connects a compressed air hose and a compressor with a pressure gauge to an air conditioner pipe, injects compressed air into the pipe, applies soapy water to a point that may have leakage, and identifies a leakage point on the basis of the presence or absence of bubbles. The pressure of the compressed air is 6.0 to 10.0 kg/cm² (approximately 0.58 MPa to approximately 0.98 MPa). In this technique, foreign matter from the compressor, such as iron powder, dust, or oil, may get mixed into the compressed air and enter the inside of the air conditioning system. The entry of the foreign matter may cause damage to the devices included in the air conditioning system. In addition, moisture contained in the compressed air may enter the inside of the air conditioning system. The entry of water into the air conditioning system may also cause damage to the devices in the same manner. Furthermore, since the pressure of the compressed air is low, it takes time to check for leakage and identify a leakage point.

### Citation List

### Patent Literature

Patent Literature 1: Japanese Patent Laid-Open No. 2009-257726

### Summary of Invention

### Technical Problem

In order to solve the above problems, the present invention provides an apparatus and a method that can prevent entry of foreign matter and moisture when compressed air is injected into an air conditioning system and can more reliably and promptly check for leakage of refrigerant gas in the air conditioning system.

### Solution to Problem

In one aspect, the present invention provides an apparatus that checks for leakage of refrigerant gas from an air conditioning system. The apparatus includes a branching device including an inflow port through which dry compressed air having a predetermined moisture content or less flows in, an outflow port through which the dry compressed air flows out, and an opening and closing valve that controls a flow rate of the dry compressed air between the inflow port and the outflow port, and a pressure gauge that measures a pressure inside the air conditioning system. The apparatus preferably further includes a filter on the upstream side of the gas inflow port. The filter can remove foreign matter contained in the dry compressed air, and it is thus possible to prevent damage caused by the foreign matter to the air conditioning system. The apparatus further includes a channel through which the dry compressed air is fed from the outflow port to a service valve of the air conditioning system.

In one embodiment, preferably, the branching device further includes a second outflow port through which the dry compressed air flows out, and the apparatus further includes a second channel through which the dry compressed air is fed from the second outflow port to a second service valve of the air conditioning system. A more prompt and reliable check can be performed by feeding the dry compressed air to the inside of the air conditioning system also through the second outflow port.

In one embodiment, the apparatus preferably includes a check valve that prevents the compressed air from flowing into the filter from the inflow port, the check valve being provided between the inflow port and the filter. The check valve can prevent foreign matter inside the air conditioning system from flowing back and entering the filter.

In one embodiment, the predetermined moisture content of the dry compressed air is preferably 30%. By feeding the dry compressed air to the inside of the air conditioning system, it is possible to prevent moisture from remaining inside the air conditioning system. In one embodiment, the filter is preferably a dry filter capable of removing foreign matter and moisture contained in the dry compressed air. The use of the dry filter makes it possible to prevent not only foreign matter but also moisture contained in the dry air from entering the inside of the air conditioning system. In addition, in one embodiment, a pressure of the dry compressed air is preferably 1.0 MPa or more and 5.0 MPa or less. For example, for the use in an air conditioning system of a motor vehicle, the pressure of the dry compressed air is preferably 1.5 MPa or more and 2.5 MPa or less. By feeding the compressed air within this pressure range to the inside of the air conditioning system, it is possible to more reliably determine the presence or absence of leakage and identify a leakage point within a short time.

In another aspect, the present invention provides a method for checking for leakage of refrigerant gas from an air conditioning system. The method includes a step of feeding dry compressed air having a predetermined moisture content or less to a service valve of the air conditioning system through a filter, a step of stopping the feeding of the dry compressed air when a pressure inside the air conditioning system reaches a predetermined pressure, and a step of measuring the pressure inside the air conditioning system with the feeding of the dry compressed air stopped. When the result of the measurement shows that the pressure inside the air conditioning system decreases, the method further includes a step of feeding the dry compressed air to the service valve of the air conditioning system through the filter, and a step of identifying a leakage point of the dry compressed air from the air conditioning system. The predetermined moisture content of the dry compressed air is preferably 30%.

### Brief Description of Drawing

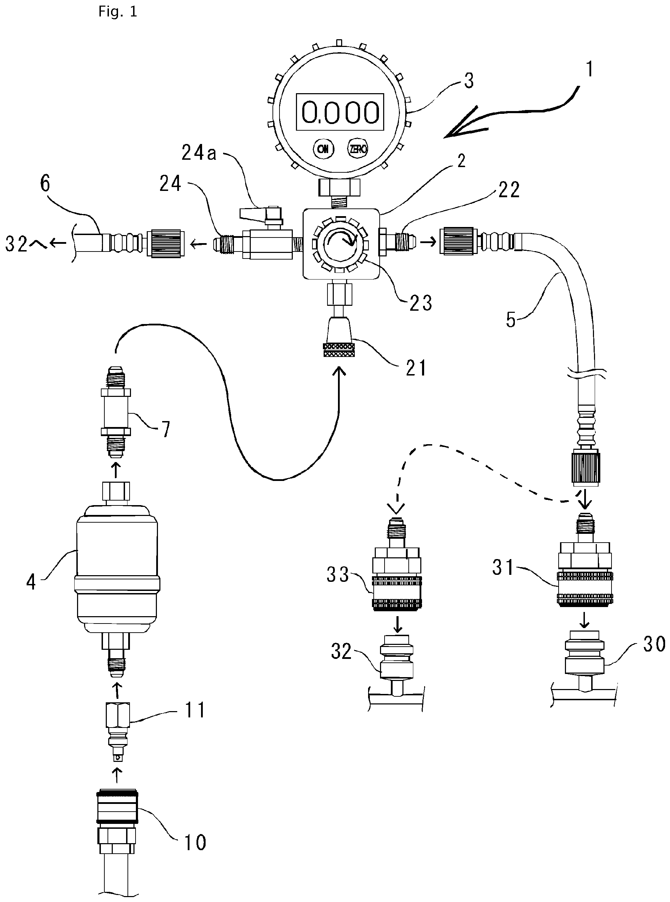

[Figure 1] Figure 1 is a diagram showing a configuration of a refrigerant gas leakage checking apparatus according to an embodiment of the present invention.

### Description of Embodiment

Hereinbelow, an embodiment of the present invention will be described in detail with reference to the drawing.

### [Configuration of Refrigerant Gas Leakage Checking Apparatus]

Figure 1 shows a configuration of a refrigerant gas leakage checking apparatus 1 according to an embodiment of the present invention. The refrigerant gas leakage checking apparatus 1 (hereinbelow, referred to as the apparatus 1) includes a branching device 2 capable of distributing compressed air into two directions.

The branching device 2 includes an inflow port 21 for compressed air. Compressed air from a compressed air generator (not shown), such as an air compressor, flows into the inflow port 21. Although the inflow port 21 preferably includes a female flare thread for connection, the inflow port 21 is not limited thereto as long as it can ensure secure connection with a filter 4 or a check valve 7, which will be described further below.

The branching device 2 further includes an outflow port 22 for compressed air and can allow the compressed air flowing into the branching device through the inflow port 21 to flow out through the outflow port 22. The flowed-out compressed air is fed to the inside of an air conditioning system to be checked for leakage of refrigerant gas through a high-pressure side service valve 30 or a low-pressure side service valve 32 of the air conditioning system. Although the outflow port 22 preferably includes a male flare thread for connection, the outflow port 22 is not limited thereto as long as it can ensure secure connection with a high-pressure hose 5, which will be described further below.

The branching device 2 further includes an opening and closing valve 23. The opening and closing valve 23 is capable of controlling the flow rate of the compressed air flowing from the inflow port 21 to the outflow port 22. The opening and closing valve 23 is open when the compressed air is fed to the air conditioning system and closed after the pressure inside the air conditioning system reaches a predetermined pressure.

The branching device 2 may be provided with a second outflow port 24 separate from the outflow port 22 so that the compressed air flowing into the branching device through the inflow port 21 can flow out through the second outflow port 24. The second outflow port 24 is preferably provided with a valve 24a for opening and closing a channel. The opening and closing valve 23 is also capable of controlling the flow rate of the compressed air flowing from the inflow port 21 to the second outflow port 24. As with the outflow port 22, it is possible to allow the compressed air to flow out through the second outflow port 24 by opening the valve 24a. In addition, when it is necessary to release the pressure inside the high-pressure hose 5, the pressure can be released through the second outflow port 24 by opening the valve 24a with the opening and closing valve 23 closed. Furthermore, as will be described further below, a second high-pressure hose 6 (second channel) similar to the high-pressure hose 5 can be connected to the second outflow port 24.

The apparatus 1 further includes a pressure gauge 3. The pressure gauge 3 is capable of measuring pressure on the downstream side relative to the opening and closing valve 23. In the present invention, a digital pressure gauge is preferably used as the pressure gauge 3 so that pressure can be measured with higher sensitivity. An analog pressure gauge can also be used, but if damage at a point having leakage is small, the analog pressure gauge is less accurate in identifying the presence or absence of leakage than the digital pressure gauge.

Here, the pressure of the compressed air fed to the air conditioning system is preferably 1.0 MPa or more and 5.0 MPa or less. When the pressure of the compressed air is lower than 1.0 MPa, it takes time to raise the pressure inside the air conditioning system to a pressure required to determine the presence or absence of leakage within a short time, and it takes a long time to determine the presence or absence of leakage after the pressure reaches the required pressure. In particular, when leakage of refrigerant gas lasts for several days to several months before the leakage affects the air conditioning system, damage at a point having the leakage may be considerably small. When the pressure of the compressed air is lower than 1.0 MPa, it is difficult to ascertain leakage of air from such small damage within a short time. When the pressure of the compressed air is higher than 5.0 MPa, the pressure may exceed the maximum pressure of refrigerant gas applied to the high-pressure side of the air conditioning system when the air conditioning system is in use. In use for checking for leakage in an air conditioning system of a motor vehicle, the pressure of the compressed air is more preferably 1.5 MPa or more and 2.5 MPa or less, taking checking accuracy and pressure resistance into consideration.

The compressed air generated by the air compressor flows into the inflow port 21, and the generated compressed air may contain foreign matter (e.g., iron powder, dust, oil, etc.). If the foreign matter enters the inside of the air conditioning system, the foreign matter may cause damage to devices constituting the air conditioning system. Thus, a filter 4 for removing foreign matter that may be contained in the compressed air is connected to the inflow port 21. The filter 4 is preferably disposed at a position as close as possible to the inflow port 21 in a channel for the compressed air from the air compressor to the inflow port 21.

In addition, the compressed air generated by the air compressor usually contains moisture. When compressed air having a high pressure of 1 MPa or more contains moisture, and the compressed air is fed to the inside of the air conditioning system, releasing the pressure inside the air conditioning system causes condensation inside a pipe of the air conditioning system due to a temperature drop caused by the sudden pressure decrease. When refrigerant gas is injected to the inside of the air conditioning system after a leakage check is performed, this condensed moisture needs to be completely removed, which requires evacuation of the inside of the air conditioning system for a long time. This becomes a large impediment to the progress of the operation of the leakage check. If the moisture cannot be removed, oil for the compressor fed to the air conditioning system together with the refrigerant gas after the leakage check is finished may come into contact with the moisture and emulsify, which may cause a malfunction such as a pump failure. Furthermore, in, for example, cold climate areas, the condensed moisture may freeze an expansion valve.

Thus, in the present invention, dry compressed air having a predetermined moisture content or less is fed to the inside of the air conditioning system to prevent moisture from remaining inside the air conditioning system. The moisture content of the dry compressed air is preferably 30% or less, more preferably 20% or less, and most preferably 18% or less. These preferable moisture contents are based on the following idea.

In typical passenger cars including foreign cars, the maximum volume of an air conditioning line of an air conditioning system is approximately 6 liters. When compressed air at a pressure of 20 atmospheres (approximately 2 MPa) is injected into the air conditioning line, air filled into the air conditioning line is 120 liters (6 liters × a pressure of 20 atmospheres). Here, in an experiment conducted by the inventors of the present application, the amount of moisture that can be removed from the air conditioning line by a vacuum dry method using a vacuum pump was 1.1 milliliters in 40 minutes, and the amount of moisture that can be removed remained approximately unchanged even if the evacuation was continued for a longer time. Thus, assuming that 120 liters of compressed air at a pressure of 20 atmospheres is filled in the air conditioning line at an ambient temperature of 40°C as a severe condition, and assuming that all the moisture contained in the compressed air condenses, the relative humidity of the compressed air to reduce the amount of moisture contained in the compressed air to less than 1.1 milliliters was calculated, and the result of the calculation was 17.93% (at an ambient temperature of 40°C and a relative humidity of 17. 93%, the amount of moisture contained in 1000 liters of air is 9.162 milliliters, and the amount of moisture per 120 liters of air is 1.099 milliliters). Therefore, the most preferable moisture content of the dry compressed air is 18% or less in the present invention.

Note that the experiment conducted by the inventors of the present application is as follows.

### (Details of Experiment)

A device including a copper strainer (TA254HF-2, manufactured by ICHINEN TASCO CO., LTD.) blocked at one end and a ball-type valve (TD220D, manufactured by ICHINEN TASCO CO., LTD.) attached to the other end of the strainer was fabricated assuming an air conditioner pipe. The weight of the strainer was previously measured. Water was put into the strainer using a dropper at a room temperature of 27°C and a humidity of 59%, and, based on the weight of the strainer in this state and the previously-measured weight of the strainer (before water was put), the weight of the water was 4.7 g. Then, a vacuum pump (EVP-35, manufactured by KYOTO TOOL CO., LTD.) was connected to the valve side through a hose (TA134FN-3, manufactured by ICHINEN TASCO CO., LTD.), and the strainer was evacuated for 45 minutes. As a result, condensation occurred on the surface of the strainer. After the condensation was completely removed, the weight of the strainer was measured with the valve closed, and the result thereof was 3.6 g (-1.1 g). Then, the weight of the strainer was 2.6 g (-1.0 g) after evacuation for 136 minutes, and the weight of the strainer was 1.6 g (-1.0 g) after further evacuation for 62 minutes. This experiment result shows that the amount of moisture that can be removed in one evacuation operation is 1.0 to 1.1 g (1.0 cc to 1.1 cc), and this amount does not change after 45 minutes or more of evacuation (note that it is usually considered by those skilled in the art that evacuation causes no change even if the evacuation is performed for 30 minutes or more).

While a method for generating the dry compressed air having the predetermined moisture content or less is not limited to any particular method, for example, a commercially available high-pressure compressor (e.g., EC1445H3, manufactured by Koki Holdings Japan Co., Ltd.) can be used. Such a high-pressure compressor employs, for example, a two-stage compression system and can generate dry compressed air by causing condensation in the middle of the two-stage compression process to dehumidify high-pressure air.

When necessary, a dry filter is preferably used as the filter 4 so that not only foreign matter but also moisture contained in the compressed air can be additionally removed. Note that when the moisture content of the compressed air from the air compressor is 30% or less, it is not necessarily necessary for the filter 4 to remove moisture, and the filter 4 may be a filter that only has the function of merely removing foreign matter.

A filter having high pressure resistance is preferably used as the filter 4 so as to prevent damage even when the compressed air from the air compressor flows in. For example, a commercially available filter that is used to collect old refrigerant gas from air conditioning systems can be used as the filter 4.

More preferably, the check valve 7 that prevents the compressed air from flowing into the filter 4 from the inflow port 21 is provided between the filter 4 and the inflow port 21. Even if foreign matter is present inside the air conditioning system, the check valve 7 can prevent the foreign matter from entering the filter 4 together with the flow of the compressed air flowing back from the inflow port 21.

A feed port 10 for the compressed air generated by the air compressor is connected to the filter 4. A one-touch type coupler (e.g., one-touch coupler) is preferably used to connect the compressed air feed port 10 and the filter 4 to enable easy attachment and detachment therebetween, but this is not a limitation. In the embodiment of Figure 1, a female coupler is used on the compressed air feed port 10 side, and a male coupler 11 is used between the compressed air feed port 10 and the filter 4, but this is not a limitation.

The high-pressure hose 5 is connected to the outflow port 22. The high-pressure hose 5 is further connected to the high-pressure side service valve 30 of the air conditioning system. Thus, the compressed air flowing out of the outflow port 22 passes through the high-pressure hose 5 and is fed to the inside of the air conditioning system through the high-pressure side service valve 30. A one-touch type coupler 31 is preferably used to connect the high-pressure hose 5 and the high-pressure side service valve 30 to enable easy attachment and detachment therebetween.

The high-pressure hose 5 can also be connected to the low-pressure side service valve 32 of the air conditioning system. In this case, the compressed air flowing out of the outflow port 22 passes through the high-pressure hose 5 and is fed to the inside of the air conditioning system through the low-pressure side service valve 32. A one-touch type coupler 33 is preferably used to connect the high-pressure hose 5 and the low-pressure side service valve 32 to enable easy attachment and detachment therebetween. The high-pressure hose 5 can be connected to both the high-pressure side service valve 30 and the low-pressure side service valve 32 of the air conditioning system by simply replacing the couplers. Thus, the apparatus 1 can be connected to the service valve located at an easy-to-connect position in any manner, thereby improving workability.

In the apparatus 1, the compressed air flowing out of the second outflow port 24 can also be fed, through the second high-pressure hose 6, to a service valve (second service valve) that is different from the service valve to which the compressed air from the outflow port 22 is fed. For example, when the compressed air from the outflow port 22 is fed to the high-pressure side service valve 30 of the air conditioning system, the compressed air from the second outflow port 24 can be fed to the low-pressure side service valve 32. When the compressed air from the outflow port 22 is fed to the low-pressure side service valve 32, the compressed air from the second outflow port 24 can be fed to the high-pressure side service valve 30. That is, by using the second outflow port 24 in addition to the outflow port 22, it is possible to more promptly raise the pressure inside the system to the required predetermined pressure and also achieve more uniform pressure distribution inside the air conditioning system, which enables a more prompt and reliable check.

### [Refrigerant Gas Leakage Checking Method]

Next, a method for checking for leakage of refrigerant gas in an air conditioning system using the apparatus 1 will be described with an example of an air conditioning system of a motor vehicle. Leakage of refrigerant gas is checked in a state in which refrigerant gas inside the air conditioning system is completely extracted using, for example, a refrigerant collecting system that is commonly used and an engine of the motor vehicle is stopped.

First, the opening and closing valve 23 of the branching device 2 of the apparatus 1 is closed, and the valve 24a at the second outflow port 24 is also closed as necessary, and, in this state, the apparatus 1 is connected to the air compressor that generates compressed air and the air conditioning system of the motor vehicle. The filter 4 is connected to the inflow port 21 of the branching device 2 through the check valve 7 provided as necessary, and one end of the high-pressure hose 5 is connected to the outflow port 22. When the second outflow port 24 is used, one end of the second high-pressure hose 6 is connected to the second outflow port 24.

The filter 4 is connected to the compressed air feed port 10 through the coupler 11. The other end of the high-pressure hose 5 is connected to the high-pressure side service valve 30 of the air conditioning system through the coupler 31. In addition, when the second high-pressure hose 6 is used, the other end of the second high-pressure hose 6 is connected to the low-pressure side service valve 32 of the air conditioning system through the coupler 33. This completes formation of a channel for the compressed air from the air compressor to the air conditioning system.

Then, after the pressure gauge 3 is turned on and the air compressor is started, the opening and closing valve 23 of the branching device 2 (in addition, the valve 24a as necessary) is opened. The opening and closing valve 23 can allow the compressed air to flow out only from the outflow port 22 or to flow out from both the outflow port 22 and the second outflow port 24. Accordingly, the compressed air passes through the filter 4 and is fed to the inside of the air conditioning system through the high-pressure side service valve 30 (and the low-pressure side service valve 32) of the air conditioning system. The compressed air fed to the inside of the air conditioning system is dry compressed air that does not cause condensation inside the air conditioning system when pressure is released, and the moisture content of the compressed air that does not cause condensation is preferably 30% or less, more preferably 20% or less, and most preferably 18% or less.

The compressed air is continuously fed, and when a value of the pressure gauge 3 reaches the predetermined pressure (the pressure set at any pressure of 1.0 MPa or more and 5.0 MPa or less), that is, when the pressure inside the air conditioning system reaches the predetermined pressure, the feeding of the compressed air is stopped. In this state, an operation for identifying a point having leakage of the compressed air on the devices and the pipes of the air conditioning system is performed. A known method can be used as the leakage point identifying operation. For example, the leakage point can be identified by spraying a detergent diluted with water onto points that may have leakage, and visually checking the point where the detergent bubbles.

When the leakage point is identified, the leakage point is repaired after the pressure inside the air conditioning system is released. The pressure inside the air conditioning system can be released by, for example, opening the valve 24a with the opening and closing valve 23 closed. After the repair, the compressed air is fed to the inside of the air conditioning system, and the presence or absence of leakage is checked again in the same manner as above. When it is confirmed that the value of the pressure gauge 3 does not change, the apparatus 1 is detached from the air conditioning system, and a refrigerant gas filling operation is performed in the usual way.

As another method, an operation for measuring the value of the pressure gauge 3 for a certain period of time may be performed after the pressure inside the air conditioning system reaches the predetermined pressure and the feeding of the compressed air is stopped and before the operation for identifying the leakage point. This value indicates the pressure inside the air conditioning system. If there is damage on the air conditioning system, which causes leakage of refrigerant gas, the value of the pressure gauge 3 gradually degreases. That is, the presence or absence of leakage from the air conditioning system can be checked by observing changes in the value of the pressure gauge 3. When the decrease in the value of the pressure gauge 3 is confirmed, the feeding of the compressed air is started again.

### Reference Signs List

- 1: refrigerant gas leakage checking apparatus
- 2: branching device
21 inflow port
22 outflow port
23 opening and closing valve
24 second outflow port
24a valve
- 3: pressure gauge
- 4: filter
- 5: high-pressure hose
- 6: second high-pressure hose
- 7: check valve
- 10: compressed air feed port (female coupler)
- 11: male coupler
- 30: high-pressure side service valve
- 32: high-pressure side coupler
- 32: low-pressure side service valve
- 33: low-pressure side coupler

## Claims

1. A method for checking for leakage of refrigerant gas from an air conditioning system, the method comprising:
a step of feeding dry compressed air having a predetermined moisture content or less to a service valve of the air conditioning system through a filter;
a step of stopping the feeding of the compressed air when a pressure inside the air conditioning system reaches a predetermined pressure; and
a step of identifying a leakage point of the compressed air from the air conditioning system.

2. The method according to claim 1, further comprising:
between the step of stopping the feeding of the compressed air and the step of identifying the leakage point of the compressed air,
a step of measuring the pressure inside the air conditioning system with the feeding of the compressed air stopped; and
a step of feeding the compressed air to the service valve of the air conditioning system through the filter when the pressure inside the air conditioning system decreases in the step of measuring the pressure inside the air conditioning system.

3. The method according to claim 1 or 2, wherein the predetermined moisture content is 30%.

4. The method according to claim 3, wherein the filter is a dry filter capable of removing foreign matter and moisture contained in the compressed air.

5. The method according to claim 1 or 2, further comprising a step of feeding the compressed air to a second service valve of the air conditioning system through the filter.

6. The method according to claim 1 or 2, wherein the predetermined pressure is 1.0 MPa or more and 5.0 MPa or less.

7. The method according to claim 1 or 2, wherein, in the step of measuring the pressure inside the air conditioning system, the pressure is measured using a digital pressure gauge.

8. An apparatus that checks for leakage of refrigerant gas from an air conditioning system, the apparatus comprising:
a branching device including an inflow port through which dry compressed air having a predetermined moisture content or less flows in, an outflow port through which the compressed air flows out, and an opening and closing valve that controls a flow rate of the compressed air between the inflow port and the outflow port;
a pressure gauge that measures a pressure inside the air conditioning system;
a filter that removes foreign matter contained in the compressed air before the compressed air flows into the inflow port; and
a channel through which the compressed air is fed from the outflow port to a service valve of the air conditioning system.

9. The apparatus according to claim 8, wherein
the branching device further includes a second outflow port through which the compressed air flows out, and
the apparatus further comprises a second channel through which the compressed air is fed from the second outflow port to a second service valve of the air conditioning system.

10. The apparatus according to claim 8 or 9, further comprising a check valve that prevents the compressed air from flowing into the filter from the inflow port, the check valve being provided between the inflow port and the filter.

11. The method according to claim 8 or 9, wherein the predetermined moisture content is 30%.

12. The apparatus according to claim 11, wherein the filter is a dry filter capable of removing foreign matter and moisture contained in the compressed air.

13. The apparatus according to claim 8 or 9, wherein the pressure gauge is a digital pressure gauge.

14. The apparatus according to claim 1 or 2, wherein a pressure of the compressed air is 1.0 MPa or more and 5.0 MPa or less.
